Europäisches Patentamt

European Patent Office

Office européen des brevets

(11) Veröffentlichungsnummer: **0 225 842**
**A1**

## (12) EUROPÄISCHE PATENTANMELDUNG

(21) Anmeldenummer: 86810438.1

(22) Anmeldetag: 06.10.86

(51) Int. Cl.⁴: **B 05 B 13/06**
B 05 B 15/04, B 05 B 7/14

(30) Priorität: 25.10.85 CH 4600/85

(43) Veröffentlichungstag der Anmeldung:
16.06.87 Patentblatt 87/25

(84) Benannte Vertragsstaaten:
CH DE FR GB IT LI NL

(71) Anmelder: **Frei, Siegfried**
**Sammelbühlstrasse**
**CH-9053 Teufen (CH)**

(72) Erfinder: **Hohl, Ernst**
**Hofenstrasse 18**
**CH-9303 Wittenbach (CH)**

**Frei, Siegfried**
**Sammelbühlstrasse**
**CH-9053 Teufen (CH)**

(74) Vertreter: **Gachnang, Hans Rudolf**
**Algisserstrasse 33**
**CH-8500 Frauenfeld (CH)**

(54) Verfahren zum Reinigen und Aufbereiten von Pulverlacken für die Dosennahtbeschichtung sowie eine Anlage zum Reinigen und Aufbereiten von Pulverlacken für die Dosennahtbeschichtung.

(57) Beim erfindungsgemässen Verfahren wird das frische Neupulver direkt der Siebmaschine (25) zugeführt und nach der Siebmaschine unmittelbar dem Behälter (35) übergeben. von welchem aus das Pulver zur Applikationsanlage (15) gefördert wird. Das aus der Applikationsanlage (15) zurückgesaugte Ueberschusspulver wird einem Sammelbehälter (3) zugeführt. dort von der Transportluft getrennt und mittels eines Zellenrades (59) unten am Sammelbehälter (3) entnommen und ebenfalls in die Siebmaschine (25) geleitet.

**EP 0 225 842 A1**

## Beschreibung

Verfahren zum Reinigen und Aufbereiten von Pulverlacken für die Dosennahtbeschichtung sowie eine Anlage zum Reinigen und Aufbereiten von Pulverlacken für die Dosennahtbeschichtung

Gegenstand der vorliegenden Erfindung ist ein Verfahren zum Reinigen und Aufbereiten von Pulverlacken für die Dosennahtbeschichtung gemäss Oberbegriff des Patentanspruches 1.

Gegenstand der Erfindung ist weiter eine Anlage zum Reinigen und Aufbereiten von Pulverlacken für die Dosennahtbeschichtung gemäss Patentanspruch 4.

Zum Beschichten der Schweissnähte an Dosen muss der Applikationsanlage das Pulver in fluidierter Form mittels eines Transportluftstromes zugeführt werden. Ein Teil des zugeführten Pulvers wird durch die Absaugung in der Applikationsanlage zurück zur Aufbereitungsanlage gefördert, dort gereinigt und für eine Wiederverwendung mit neuem Pulver vermischt.

Auch das neu zugeführte Pulver, das meist in Fässern oder Beuteln vom Hersteller geliefert wird, benötigt vor dem Auftrag eine Aussiebung und Aufbereitung, bevor es fluidisiert der Applikationsvorrichtung zuführbar ist.

In einer bekannten Anlage gemäss der US-Patentschrift 4,205,621 wird das von der Applikationsanlage zurückgesaugte Ueberschusspulver in Sammelbehälter von der Förderluft getrennt, getrocknet und mit Neupulver vermischt. Anschliessend werden die beiden miteinander vermischten Komponenten des Pulvers einer Siebmaschine zugeführt, bei der sogenannte over-sized Teilchen ausgeschieden werden, welche auch im neuen Pulver vorhanden sein können. Von dieser Siebmaschine wird das Pulver anschliessend in einen Behälter befördert, in welchem das Pulver fluidisiert und mittels Transportluft durch eine Leitung der Applikationsvorrichtung zugeleitet wird. Das nicht aufgetragene Pulver wird dann, wie anfangs beschrieben, zurück in den Zyklon zur Vermischung mit Frischpulver gefördert.

Anlagen, die nach diesem Verfahren arbeiten, haben den Nachteil dass der Sammelbehälter,die Trocken- und Mischanlage sehr gross dimensioniert werden müssen, da zu jeder dort verarbeiteten Einheit Ueberschusspulver mindestens neun Einheiten von neuem Pulver hinzukommen. Insbesondere die riesigen Filter und die Trocken- und Mischanlage benötigen sehr viel Raum und elektrische Energie.

Die Aufgabe der vorliegenden Erfindung besteht nun darin, ein Verfahren zum Reinigen und Aufbereiten von Pulverlacken zu schaffen, bei dem sowohl der Raumbedarf wie auch der Energie konsum, der diese Verfahren durchführenden Anlage wesentlich verkleinert werden kann, ohne dabei eine Qualitätseinbusse des der Applikationsanlage zugeführten Pulvers in Kauf nehmen zu müssen.

Nach der Erfindung wird diese Aufgabe durch ein Verfahren gemäss dem kennzeichnenden Merkmal des Patentanspruches 1 sowie durch eine Anlage gemäss dem Kennzeichen des Patentanspruches 4 gelöst.

Durch die Zuführung des neuen Pulvers direkt in die Siebmaschine unter Umgehung des Sammelbehälters entsteht eine kostengünstige kompakte Anlage, welche zudem wegen ihrer geringen Aussenmasse direkt neben der Schweissmaschine, d.h. bei der Applikationsanlage aufgestellt werden kann. Dadurch entfallen die bisher notwendig gewesenen langen Schläuche und Leitungen zwischen der Schweissmaschine und der in einem Abstand davon aufgestellten Aufbereitungsanlage, was zu einer weiteren Einsparung an teurer Blas- und Rücksaugluft sowie zu einer Qualitätsverbesserung des Pulvertransportes bezüglich Mengenkonstanz führt.

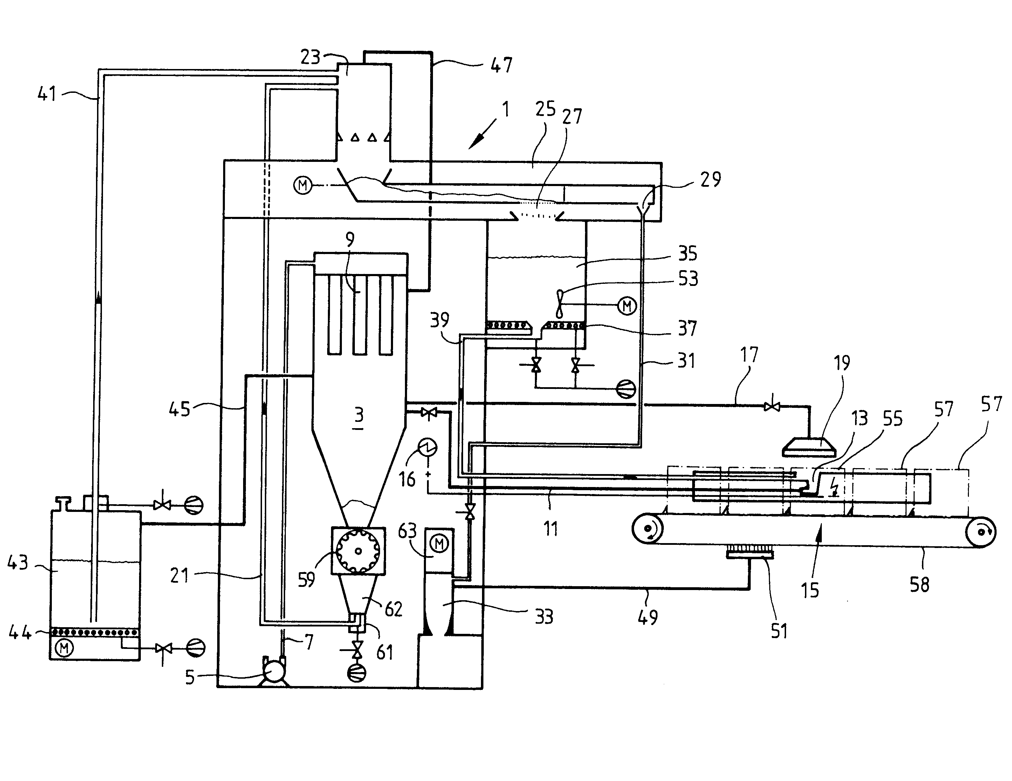

Anhand eines illustrierten Ausführungsbeispiels wird die Erfindung näher erläutert. Die einzige Figur zeigt den schematischen Ablauf der Reinigung und Aufbereitung.

Die mit 1 bezeichnete Aufbereitungsanlage besteht aus einem Sammelbehälter 3, der an eine Saugquelle 5 angeschlossen ist. Im Sammelbehälter 3 ist vor dem Eingang der Leitung 7 zur Saugquelle 5 ein Filterorgan 9 eingesetzt. In den Sammelbehälter münden eine Leitung 11, welche mit einem Sprühraum 13 einer Applikationsanlage 15 verbunden ist und eine Leitung 17, welche mit einer Aussenabsaugung 19 der Applikationsanlage 15 verbunden ist. Vom trichterförmigen unteren Teil des Sammelbehälters 3 führt eine Leitung 21 zu einem Luftabscheider 23, der auf eine Siebmaschine 25 aufgesetzt ist. Die Siebmaschine 25 besitzt einen Ausgang 27 für das gesiebte Pulver und einen zweiten kleineren Ausgang 29 für das ausgeschiedene Pulver. Das ausgeschiedene Pulver wird durch eine Leitung 31 zu einem Abfallbehälter 33 geleitet und kann dort sporadisch entnommen werden. Das durch den Ausgang 27 die Siebmaschine 25 verlassende Pulver fällt direkt in einen Behälter 35, dessen Boden mit einer Fluidiervorrichtung 37 versehen ist. Von der Fluidiervorrichtung 37 führt eine weitere Leitung 39 direkt zur Applikationsanlage 15.

Zur Speisung der Anlage 1 mit Frischpulver führt eine Leitung 41 aus einem Transportbehälter 43 in den Luftabscheider 23.Vorzugsweise ist der Transportbehälter 43 mit einem Fluidierungsboden 44 ausgerüstet, so dass das Pulver leicht entnommen werden kann. Damit im Transportbehälter durch die in diesen eingebrachte Fluidierungsluft kein Ueberdruck entsteht, ist dieser über eine dünne Leitung 45 mit dem unter Unterdruck stehenden Sammelbehälter 3 verbunden. Auch der Luftabscheider 23 ist über eine Leitung 47 mit dem Sammelbehälter 3 verbunden, um die mit dem Pulver zugeführte Luft abführen zu können.

Der Abfallbehälter 33 kann zudem noch über eine Leitung 49 mit einer Reinigungsvorrichtung 51 zur Reinigung der Transportvorrichtung 58 für die Dosenrümpfe 57 (schematisch dargestellt) verbunden.

Die Siebmaschine 25 kann über den Sammelbehälter 3 angeordnet sein (Figur), was eine sehr kompakte Anlage 1 ergibt.Wenn die Siebmaschine unten in der Anlage 1 angeordnet wird, kann das Pulver vom Zellenrad 59 direkt in die Siebmaschine 25 gefördert werden. Es entfällt dann der Abscheider 23 und die Feindosiervorrichtung 61.

Das erfindungsgemässe Verfahren zum Reinigen und Aufbereiten von Pulverlacken arbeitet wie folgt: Im Behälter 35 befindet sich stets eine minimale Menge von Pulver, das allenfalls durch ein Rührwerk 53 sowie durch die Fluidisiervorrichtung 37 transportfähig gehalten wird. Durch die Leitung 39 fliesst das Pulver mit Transportluft direkt in den Sprühraum 13 der Applikationsanlage 15 und wird dort auf die Schweissnaht 55 eines über die Applikationsanlage 15 geführten Dosenrumpfes 57 aufgetragen. Dabei lässt es sich nicht vermeiden, dass etwa 5-10 % des herangeführten Pulvers nicht an der Schweissnaht 55 haften bleibt und durch die Leitung 11 in den Sammelbehälter 3 gesaugt und von der Luft getrennt wird. Das sich am unteren Ende des Sammelbehälters 3 sammelnde Pulver wird mittels eines Zellenrades 59 dem Sammelbehälter 3 entnommen, fällt in einen Zwischenbehälter 62 und wird mittels eines Injektors 61 durch die Leitung 21 zum Luftabscheider 23 geführt.

Diese geringe Menge von zurückgesaugtem Pulver wird mit etwa dem 20-fachen an Frischpulver, das aus dem Behälter 43 in den Luftabscheider gespeist wird, vermischt, und in der Siebmaschine 25 werden die sowohl im frischen Pulver als auch im zurückgesaugten Pulver vorhandenen over-sized Pulverkörner ausgeschieden. Gleichzeitig erfahren die beiden miteinander gemischten Pulverkomponenten eine sehr innige Durchmischung, bevor sie in den Behälter 35 fallen und wieder für einen Auftrag in der Applikationsanlage 15 zur Verfügung stehen.

Die over-sized Pulverpartikel, welche in den Abfallbehälter 33 fallen, werden dort zusammen mit den aus der Reinigungsanlage 51 und Transporteinrichtung 58 kommenden Schmutzteilchen gesammelt. Damit bei der Entnahme der verschmutzten Teilchen keine Beeinflussung der sehr genau einzuhaltenden Druckverhältnisse sowohl auf der Druckals auch auf der Saugseite der Anlage entstehen kann, ist der Abfallbehälter 33 mit einer eigenen unabhängigen Saugvorrichtung 63 ausgerüstet.

Durch die Verwendung eines Zellenrades 59 zur Entnahme des sich im Sammelbehälter angesammelten Pulvers wird vermieden, dass bei der Entnahme des Pulvers aus dem Sammelbehälter 3 absaugseitig Schwankungen entstehen können, die sich bis zur Applikationsanlage 15 ausbreiten und dort zu Störungen führen können.

Das Zellenrad 59 arbeitet wie folgt: Das sich unten im Behälter 3 ansammelnde Pulver wird in kleinster Portion, nämlich der Menge, die zwischen zwei Zellenradflügeln Platz findet, dem Behälter 3 entnommen, verbleibt während einer Winkeldrehung von 180° im Zellenrad 59 und fällt unten in den Zwischenbehälter 62. Wenn der Zwischenbehälter 62 gefüllt ist, weil dort kein Pulver entnommen wird, können sich die Portionen im Zellenrad 59 nicht entladen und verbleiben in diesem, bis im Zwischenbehälter 62 wieder freier Raum besteht.

## Patentansprüche

1. Verfahren zum Reinigen und Aufbereiten von Pulverlacken für die Dosenbeschichtung, bei dem neues Pulver und aus einer Applikationsvorrichtung zurückgesaugtes Ueberschusspulver gereinigt und zur direkten Wiederverwendung in der Applikationsvorrichtung aufbereitet wird, dadurch gekennzeichnet, dass

a) das Ueberschusspulver in einen unter Unterdruck stehenden Sammelbehälter (3) gefördert und von der Transportluft befreit wird,

b) das im Sammelbehälter (3) gesammelte Ueberschusspulver dem Sammelbehälter (3) genommen und zu einer Siebmaschine (25) geleitet,

c) dort mit frischem Neupulver vermischt und gesiebt wird und

d) das mit frischem Neupulver durchmischte und gesiebte Ueberschusspulver in einen Behälter (35) geleitet und durch eine Fluidisiervorrichtung (37) diesem entnommen und direkt der Applikationsanlage (15) zugeführt wird.

2. Verfahren nach Anspruch 1, dadurch gekennzeichnet, dass das frische Neupulver und das Ueberschusspulver vor dem Eintritt in die Siebmaschine (25) in einem Luftabscheider (23) von Transportluft befreit werden.

3. Verfahren nach Anspruch 1 oder 2, dadurch gekennzeichnet, dass das gesiebte und gereinigte Ueberschusspulver und Frischpulver im freien Fall aus der Seibmaschine (25) in den Behälter (35) gelangt.

4. Anlage zum Reinigen und Aufbereiten von Pulverlacken für die Dosenbeschichtung mit einem Behälter (35) zum Fluidisieren des Pulver vor dem Transport zu einer Applikationsanlage (15), einem Sammelbehälter (3) zum Sammeln des aus der Applikationsanlage (15) zurückgesaugten Ueberschusspulvers, einer Siebmaschine (25) zum Sieben des neuen Frischpulvers und des Ueberschusspulvers und einer Absaugquelle zur Erzeugung eines Unterdruckes im Sammelbehälter (3) sowie einem Behälter (43) mit frischem Neupulver, dadurch gekennzeichnet, dass der Behälter (43) durch eine Leitung (41) mit der Siebmaschine (25) verbunden ist.

5. Anlage nach Anspruch 4, dadurch gekennzeichnet, dass zwischen dem Behälter (43) und der Siebmaschine (25) ein Luftabscheider (23) angeordnet ist.

6. Anlage nach Anspruch 4 oder 5, dadurch gekennzeichnet, dass die Siebmaschine (25) direkt auf den Behälter (35) aufgesetzt ist derart, dass das gesiebte Pulver in freiem Fall in den Behälter (35) gelangt.

7. Anlage nach einem der Ansprüche 4 bis 6, dadurch gekennzeichnet, dass am unteren Ende des Behälters (3) ein Zellenrad (59) zur Entnahme des zurückgesaugten Pulvers angeordnet ist.

8. Anlage nach Anspruch 7, dadurch gekennzeichnet, dass das Zellenrad (59) das Pulver in einen Zwischenbehälter (62) fördert, von welchem dieses mittels eines Injektors (61) weiterförderbar ist.

9. Anlage nach einem der Ansprüche 4 bis 8, dadurch gekennzeichnet, dass die Siebmaschine (25) und eine Reinigungsvorrichtung (51) zum Reinigen der Transportanlage (58) für die Dosenrümpfe (57) mit einem Abfallbehälter (33) verbunden sind, der eine eigene, von der Absaugung für den Sammelbehälter (3) unabhängige Absaugung (63) aufweist.

10. Anlage nach einem der Ansprüche 4 bis 9, dadurch gekennzeichnet, dass die Siebmaschine (25) über dem Sammelbehälter (3) für zurückgesaugtes Ueberschusspulver angeordnet ist.

11. Anlage nach einem der Ansprüche 4 bis 7, dadurch gekennzeichnet, dass der Behälter (3) über der Siebmaschine (25) angeordnet ist, so dass das Pulver direkt vom Zellenrad (59) in die Siebmaschine (25) gelangt.

**Europäisches Patentamt**

# EUROPÄISCHER RECHERCHENBERICHT

Nummer der Anmeldung

EP 86 81 0438

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 402 488 (CONTINENTAL) <br><br> * Seite 5, Zeilen 16-25; Abbildung 1 * <br><br> --- | 1,3,4, 6 | B 05 B 13/06 <br> B 05 B 15/04 <br> B 05 B 7/14 |
| Y | US-A-3 960 323 (DUCAN) <br><br> * Spalte 5, Zeilen 27-65; Abbildung 1 * <br><br> --- | 1,3,4, 6 | |
| A | CH-A- 529 590 (GEMA) <br> * Spalte 4, Zeilen 17-47; Abbildung 1 * <br><br> --- | 1-6,8 | |
| A | DE-A-1 910 487 (EISENMANN) <br> * Insgesamt * <br><br> --- | 1-8 | |
| A | DE-A-2 555 067 (EISENMANN) <br> * Seite 15, Zeilen 17-24; Abbildung 5 * <br><br> ----- | 11 | RECHERCHIERTE SACHGEBIETE (Int. Cl.4) <br><br> B 05 B |

Der vorliegende Recherchenbericht wurde für alle Patentansprüche erstellt.

| Recherchenort | Abschlußdatum der Recherche | Prüfer |
|---|---|---|
| DEN HAAG | 21-01-1987 | JUGUET J.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82